# EUROPEAN PATENT SPECIFICATION

(11) **EP 4 187 700 B1**
(45) Date of publication and mention of the grant of the patent: **26.11.2025**
(21) Application number: 22759934.7
(22) Date of filing: 08.02.2022
(51) Int. Cl.: H01M 50/24, H01M 50/211, H01M 50/30

(54) **BATTERY MODULE AND BATTERY PACK INCLUDING THE SAME**
BATTERIEMODUL UND BATTERIEPACK MIT DIESEM
MODULE DE BATTERIE ET BLOC-BATTERIE COMPRENANT CELUI-CI

(30) Priority: 24.02.2021 KR 20210024696
(43) Date of publication of application: 31.05.2023
(73) Proprietor: LG Energy Solution, Ltd., Seoul 07335 (KR)
(72) Inventor: KIM, Kwangmo, Daejeon 34122 (KR); SEONG, Junyeob, Daejeon 34122 (KR); JUNG, Hyemi, Daejeon 34122 (KR); BYOUN, Dayoung, Daejeon 34122 (KR)
(74) Representative: Plasseraud IP
(86) International application number: PCT/KR2022/001910
(87) International publication number: WO 2022/182016

(56) References cited:
- WO-A1-2018/059143
- WO-A1-2020/180114
- CN-U- 211 404 602
- JP-A- 2010 097 836
- JP-A- 2013 037 794
- KR-A- 20170 054 878
- KR-A- 20200 107 213
- KR-A- 20210 004 189
- US-A1- 2016 093 842

## Description

### [Technical Field]

### CROSS-REFERENCE TO RELATED APPLICATION(S)

This application claims priority to and the benefit of Korean Patent Application No. 10-2021-0024696 filed in the Korean Intellectual Property Office on February 24, 2021.

The present invention relates to a battery module and a battery pack including the same, and more particularly, to a battery module having enhanced safety and a battery pack including the same.

### [Background Art]

A mobile device such as a mobile phone, a laptop computer, a camcorder or a digital camera is used daily in modern society, and technology related to the mobile device as described above is thus being actively developed. In addition, a secondary battery capable of being charged and discharged may be a method to solve air pollution caused by a conventional gasoline vehicle using a fossil fuel, and may be used as a power source of an electric vehicle (EV), a hybrid electric vehicle (HEV), a plug-in hybrid electric vehicle (P-HEV) or the like. Accordingly, there is an increasing need for development of the secondary battery.

The secondary battery currently commercialized may include a nickel cadmium battery, a nickel hydride battery, a nickel zinc battery, a lithium secondary battery and the like. Among these batteries, the lithium secondary battery may be in spotlight because of having little memory effect compared to the nickel-based secondary batteries, thus having its free charge and discharge, very low self-discharge rate and high energy density.

The lithium secondary battery may mainly use a lithium-based oxide and a carbon material as a positive electrode active material and a negative electrode active material, respectively. The lithium secondary battery may include an electrode assembly in which a positive electrode plate and a negative electrode plate to which the positive electrode active material and the negative electrode active material are respectively applied are disposed while having a separator interposed therebetween, and a battery case accommodating and sealing the electrode assembly together with an electrolyte.

In general, the lithium secondary battery may be classified into a can-type secondary battery in which the electrode assembly is embedded in a metal can and a pouch-type secondary battery in which the electrode assembly is embedded in a pouch of an aluminum laminate sheet, based on a shape of its exterior material.

The secondary battery used in a small device may have two or three battery cells disposed therein. However, the secondary battery used in a medium to large-sized device such as an automobile may use a battery module in which a plurality of battery cells are electrically connected to each other. Such a battery module in which the plurality of battery cells are connected in series or parallel to each other to form a battery cell stack may have improved capacity and output. One or more battery modules may be mounted together with various control and protection systems such as a battery disconnect unit (BDU), a battery management system (BMS), a cooling system and the like to form a battery pack.

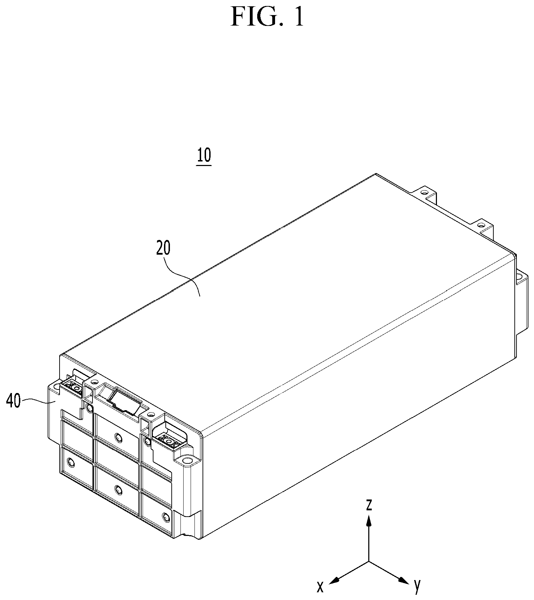

FIG. 1 is a perspective view of a conventional battery module.

Referring to FIG 1, a conventional battery module 10 may be manufactured by accommodating a battery cell stack (not shown) in a module frame 20, and then joining an end plate 40 to an open portion of the module frame 20. Here, the battery cell stack accommodated in the module frame 20 may have a structure in which several battery cells are stacked. Accordingly, when a thermal runaway occurs in any one of the battery cells, heat and flame occurring from the corresponding cell may easily propagate to an adjacent battery cell. In addition, a risk of explosion may be increased when heat is accumulated in the battery module, and there is thus an increasing need for a structure in which heat and flame are properly dissipated to the outside without propagating to the adjacent cell.

KR 2020 0107213 relating to an energy storage system (ESS) module, WO 2018/059143 relating to a battery module, WO 2020/180114 relating to a battery module and CN 211 404 602 relating to a soft-pack battery module, are known.

### [Disclosure]

### [Technical Problem]

Exemplary embodiments of the present invention provide a battery module in which flame is blocked from being transmitted to an adjacent battery cell even when ignition occurs in the battery module and the flame is easily discharged to the outside, and a battery pack including the same.

However, a technical problem to be solved by the exemplary embodiments of the present invention is not limited to the aforementioned problem, and may be variously expanded in the scope of a technical idea included in the present invention.

### [Technical Solution]

According to an exemplary embodiment of the present invention, a battery module includes: a battery cell stack stacking a plurality of battery cells therein; a module frame accommodating the battery cell stack; and at least one flame separation structure interposed between the adjacent battery cells among the plurality of battery cells, or between the battery cell stack and the module frame, wherein the flame separation structure includes a first extension portion extended to a space between the battery cell stack and the module frame.

At least two flame separation structures may be provided, and one or more battery cells may be positioned between two adjacent flame separation structures among the flame separation structures.

An isolated space surrounded by the first extension portion, the module frame and the battery cell stack may be positioned between the two adjacent flame separation structures among the flame separation structures.

Each of the plurality of battery cells may include an electrode lead, and the flame separation structure may include a second extension portion extended corresponding to a region where the electrode lead protrudes.

The flame separation structure may include an opening positioned in at least a portion of the rest except the first extension portion and the second extension portion.

The flame separation structure may include at least one of a flame-retardant pad and a flame separation sheet.

The flame-retardant pad may include a silicone foam pad.

The flame separation structure may include the flame-retardant pad, and the flame separation sheet positioned on at least a portion of at least one surface of the flame-retardant pad.

The flame separation sheet may be positioned corresponding to the first extension portion.

The flame separation sheet may be positioned corresponding to the second extension portion.

The flame separation sheet may include at least one of calcium carbonate (CaCO₃), mica, glass fiber and mineral fiber composite.

The battery module further includes: an end plate covering front and rear surfaces of the battery cell stack; and an insulation cover disposed between the battery cell stack and the end plate, wherein a plurality of partition walls protrude to the battery cell stack from an inner surface of the insulation cover facing the battery cell stack.

One partition wall of the plurality of partition walls includes a pair of sub partition walls positioned on both sides of the flame separation structure.

The insulation cover includes at least one first vent hole positioned between the adjacent partition walls among the plurality of partition walls.

The end plate includes at least one second vent hole positioned corresponding to the at least one first vent hole.

A battery pack according to another exemplary embodiment of the present invention may include the battery module.

### [Advantageous Effects]

According to the exemplary embodiments of the present invention, it is possible to block the flame from being transmitted from the ignition point to the adjacent battery cell and allow the flame to be easily discharged to the outside by including the space for blocking the flame occurring from any one cell in the battery module and the path through which the flame may be discharged from the space.

The effects of the present invention are not limited to the above-mentioned effects, and other effects that are not mentioned may be obviously understood by those skilled in the art from the claims.

### [Description of the Drawings]

FIG. 1 is a perspective view of a conventional battery module.
FIG. 2 is a perspective view showing a battery module according to an exemplary embodiment of the present invention.
FIG. 3 is an exploded perspective view of the battery module of FIG. 2.
FIG. 4 is a view showing a portion of a cross section taken along a-a' of FIG. 2.
FIGS. 5a and 5b are views each showing a modified example of a flame separation structure in an exemplary embodiment of the present invention.
FIG. 6 is an exploded perspective view showing a battery cell stack in a battery module according to another exemplary embodiment of the present invention.
FIG. 7 is a perspective view showing a battery module according to yet another exemplary embodiment of the present invention.
FIG. 8 is a perspective view showing the end plate and insulation cover of the battery module of FIG. 7, viewed from the inside thereof.
FIG. 9 is a view showing a portion B in a cross section taken along b-b' of FIG. 7.

### [Mode for Invention]

Hereinafter, exemplary embodiments of the present invention are described in detail with reference to the accompanying drawings so that those skilled in the art to which the present invention pertains may easily practice the present invention. The present invention may be implemented in various different forms and is not limited to the exemplary embodiments provided herein.

A portion unrelated to the description is omitted in order to obviously describe the present invention, and the same or similar components are denoted by the same reference numeral throughout the present specification.

In addition, the size and thickness of each component shown in the accompanying drawings are arbitrarily shown for convenience of explanation, and therefore, the present invention is not necessarily limited to contents shown in the drawings. The thicknesses are exaggerated in the drawings in order to clearly represent several layers and regions. In addition, the thicknesses of some layers and regions are exaggerated in the drawings for convenience of explanation.

In addition, when an element such as a layer, a film, a region or a board is referred to as being "on" or "above" another element, the element may be "directly on" another element or may have a third element interposed therebetween. On the contrary, when an element is referred to as being "directly on" another element, there is no third element interposed therebetween. In addition, when an element is referred to as being "on" or "above" a reference element, the element may be positioned on or below the reference element, and may not necessarily be "on" or "above" the reference element toward an opposite direction of gravity.

In addition, throughout the present specification, when an element "includes" another component, it is to be understood that the element may further include a third component rather than excluding the third component, unless explicitly described to the contrary.

Further, throughout the specification, an expression "on the plane" may indicate a case where a target is viewed from the top, and an expression "on the cross section" may indicate a case where a cross section of a target taken along a vertical direction is viewed from its side.

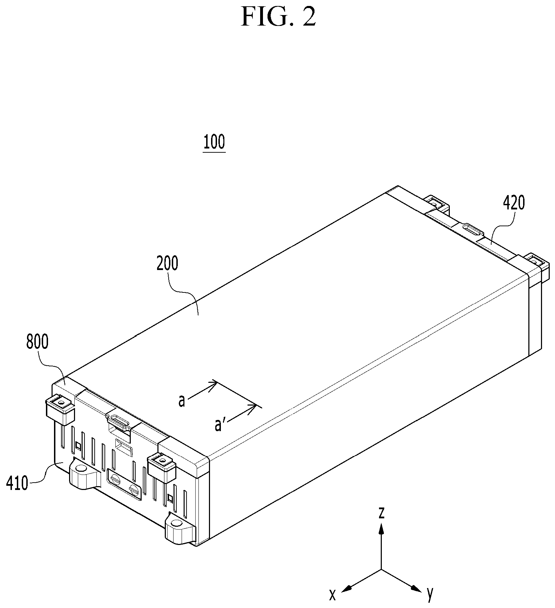

Hereinafter, a battery module according to an exemplary embodiment of the present invention is described with reference to FIGS. 2 to 4.

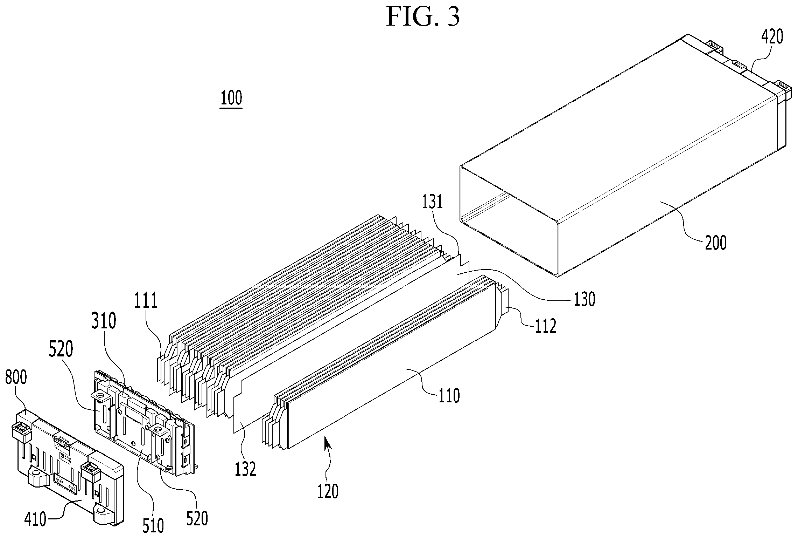

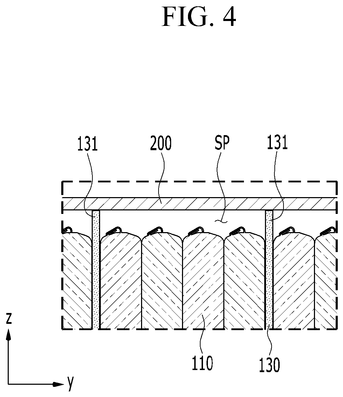

FIG. 2 is a perspective view showing a battery module according to an exemplary embodiment of the present invention. FIG. 3 is an exploded perspective view of the battery module of FIG. 2. FIG. 4 is a view showing a portion of a cross section taken along a-a' of FIG. 2.

Referring to FIGS. 2 to 4, a battery module 100 according to an exemplary embodiment of the present invention may include a battery cell stack 120 stacking a plurality of battery cells 110 therein, a module frame 200 accommodating the battery cell stack 120 and end plates 410 and 420 respectively covering front and rear surfaces of the battery cell stack 120.

First, the battery cell 110 may preferably be a pouch-type battery cell. For example, the battery cell 110 according to this exemplary embodiment may have a structure in which two electrode leads 111 and 112 face each other and each protrude from both ends of a cell body. In more detail, the electrode leads 111 and 112 may each be connected to the electrode assembly (not shown), and protrude from the electrode assembly (not shown) to the outside of the battery cell 110.

The plurality of battery cells 110 may be provided, and the plurality of battery cells 110 may be stacked to be electrically connected to each other to form the battery cell stack 120. Referring to FIG. 3, the battery cells 110 may be stacked in a y-axis direction to form the battery cell stack 120. A first bus bar frame 310 may be positioned on one surface of the battery cell stack 120 in a direction in which the electrode lead 111 protrudes (i.e. x-axis direction). Although not specifically shown, a second bus bar frame may be positioned on the other surface of the battery cell stack 120 in a direction in which the electrode lead 112 protrudes (i.e. -x-axis direction). The battery cell stack 120 and the first bus bar frame 310 may be accommodated together in the module frame 200. The module frame 200 may protect the battery cell stack 120 accommodated in the module frame 200 and an electrical component connected thereto from an external physical impact. As shown in FIG. 3, the module frame 200 may be the module frame 200 having a shape of a metal plate whose upper surface, lower surface and both sides are integrated with each other. That is, the module frame 200 having a shape of a square tube may have a space accommodating the battery cell stack 120 therein, and have the end plates 410 and 420 respectively coupled to both ends of the module frame, having the shape of the square tube. However, the present invention is not limited thereto, and may use the module frame 200 of any of various types. As a possible modification example, it is also possible that the module frame 200 has an upper cover and a U-shaped frame combined to each other or a lower plate and a U-shaped frame in a reverse direction combined to each other. However, the module frame is not limited to any particular shape.

Meanwhile, the module frame 200 may be open in the directions in which the electrode leads 111 and 112 protrude (i.e. x-axis direction and -x-axis direction), and the end plates 410 and 420 may each be positioned on both the open sides of the module frame 200. The two end plates 410 and 420 may respectively be referred to as the first end plate 410 and the second end plate 420. The first end plate 410 may join the module frame 200 while covering the first bus bar frame 310, and the second end plate 420 may join the module frame 200 while covering the second bus bar frame (not shown). That is, the first bus bar frame 310 may be positioned between the first end plate 410 and the battery cell stack 120, and the second bus bar frame (not shown) may be positioned between the second end plate 420 and the battery cell stack 120. In addition, an insulation cover 800 for electrical insulation may be positioned between the first end plate 410 and the first bus bar frame 310.

The first end plate 410 and the second end plate 420 may be positioned to respectively cover the one surface and the other surface of the battery cell stack 120. The first end plate 410 and the second end plate 420 may protect the first bus bar frame 310 and various electrical components connected thereto from the external impact, may be required to have a predetermined strength to this end, and may include a metal such as aluminum. In addition, the first end plate 410 and the second end plate 420 may respectively join edges of the module frame 200, corresponding thereto, by using a method such as welding.

The first bus bar frame 310 may be positioned on one surface of the battery cell stack 120 to cover the battery cell stack 120 and simultaneously guide connection between the battery cell stack 120 and an external device. In detail, at least one of a bus bar, a terminal bus bar and a module connector may be mounted on the first bus bar frame 310. In particular, at least one of the bus bar, the terminal bus bar and the module connector may be mounted on a surface of the first bus bar frame 310, opposite to a surface thereof facing the battery cell stack. For example, FIG. 3 shows that a bus bar 510 and a terminal bus bar 520 are mounted on the first bus bar frame 310.

The electrode lead 111 of the battery cell 110 may be bent after passing through a slit positioned in the first bus bar frame 310, and join the bus bar 510 or the terminal bus bar 520. The battery cells 110 included in the battery cell stack 120 may be connected in series or in parallel to each other by the bus bar 510 or the terminal bus bar 520. In addition, the external device or a circuit and the battery cells 110 may be electrically connected to each other through the terminal bus bar 520 exposed to the outside of the battery module 100.

The first bus bar frame 310 may include an electrically insulated material. The first bus bar frame 310 may prevent occurrence of a short circuit by limiting the contact of the bus bar 510 or terminal bus bar 520 with the battery cells 110, except for its portion where the bus bar 510 or the terminal bus bar 520 joins the electrode lead 111.

Meanwhile, as described above, the second bus bar frame may be positioned on the other surface of the battery cell stack 120, and at least one of the bus bar, the terminal bus bar and the module connector may be mounted on the second bus bar frame. The electrode lead 112 may join such a bus bar.

The battery cell stack 120 according to this exemplary embodiment may include at least one flame separation structure 130 disposed between the battery cells 110. That is, the flame separation structure 130 may be interposed between the adjacent battery cells 110 among the plurality of battery cells 110, or between the battery cell stack 120 and the module frame 200.

Here, the flame separation structure 130 may include a first extension portion 131 extended to a space between an upper surface of the battery cell stack 120 and an upper plate of the module frame 200. That is, referring to FIG. 4, one or more battery cells 110 may be disposed between the two flame separation structures 130, and here, the first extension portions 131 extended to the upper portions of the two flame separation structures 130 (i.e., z-axis upper direction in the drawing) may each be in contact with the module frame 200. Accordingly, provided is an isolated space SP surrounded by the two first extension portions 131, the battery cell 110 and the module frame 200.

In addition, the flame separation structure 130 may further include a second extension portion 132 extended corresponding to a region where the electrode lead of the battery cell 110 protrudes.

Accordingly, even when ignition occurs in any one of the battery cells 110, it is possible to block gas and flame from propagating to the adjacent battery cell 110 as much as possible, and allow the gas and the flame to be kept in the isolated space SP. In addition, the isolated space SP may be extended in a direction in which the second extension portion 132 of the flame separation structure 130 is formed instead of being connected to the adjacent cell, and serve as a movement path of the flame, and thus serve to induce the gas and the flame to be dissipated to the outside. That is, it is possible to improve safety by inducing movement of the flame along a constant path while blocking transmission of the flame and heat between the cells as much as possible.

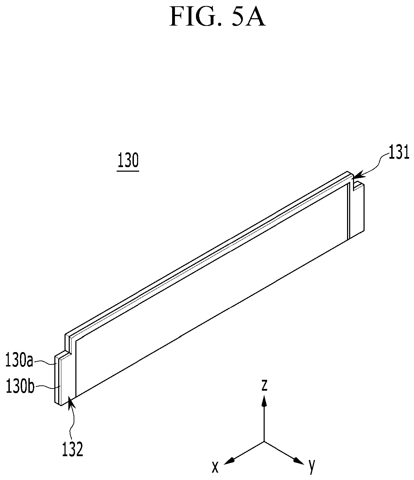

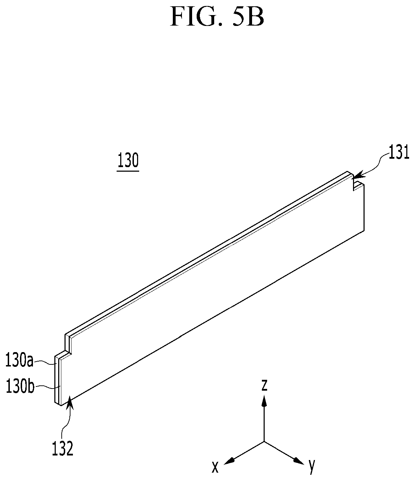

A detailed configuration of the flame separation structure 130 is described with reference to FIGS. 5a and 5b.

FIGS. 5a and 5b are views each showing a modified example of a flame separation structure in an exemplary embodiment of the present invention.

The flame separation structure 130 may include at least one of a flame-retardant pad 130a and a flame separation sheet 130b to prevent the transmission of the heat and flame occurring in the battery cell 110. Here, as shown in FIGS. 5a and 5b, the flame separation structure 130 may include the flame-retardant pad 130a and the flame separation sheet 130b positioned on one surface of the flame-retardant pad. Alternatively, the flame separation structure 130 may include the single-layered flame-retardant pad 130a or the single-layered flame separation sheet 130b. In addition, the flame separation structure 130 may have a multi-layered structure by further including the flame-retardant pad 130a and the flame separation sheet 130b rather than including the two-layered flame-retardant pad 130a and flame separation sheet 130b. In addition, one battery module 100 may include all the same flame separation structures 130 provided therein or the flame separation structures 130 configured differently based on their positions.

The flame separation sheet 130b may be positioned entirely on a surface of the flame-retardant pad 130a (see FIG. 5b), or may be positioned only corresponding to the first or second extension portion 131 or 132 of the flame separation structure130 (see FIG. 5a), i.e. a portion where a need to separate the flames is directly required.

Here, the flame-retardant pad 130a may include a silicone foam pad. The silicone foam pad, as a foam pad having pores formed therein, may have high thermal and chemical stability, and excellent flame retardant and thermal insulation properties. In particular, it is possible to secure better flame retardant property by using the silicone foam pad made of thermosetting foam silicone. However, the present invention is not limited thereto, and may appropriately use any material having excellent thermal property as the flame-retardant pad 130a.

The flame separation sheet 130b may use a sheet-shaped material including at least one of calcium carbonate (CaCO₃), mica, glass fiber and mineral fiber composite. In particular, the flame separation sheet 130b may appropriately use a mica sheet. However, the present invention is not limited thereto, and may appropriately use any material having the excellent thermal property as the flame separation sheet 130b.

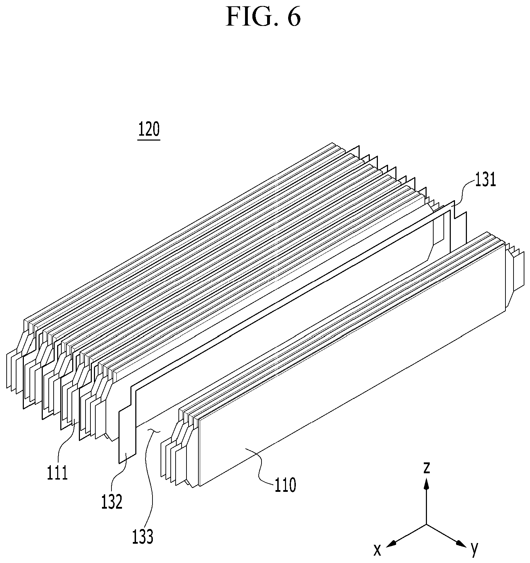

Next, another exemplary embodiment of the present invention is described with reference to FIG. 6.

FIG. 6 is an exploded perspective view showing a battery cell stack in a battery module according to another exemplary embodiment of the present invention.

Referring to FIG. 6, in another exemplary embodiment of the present invention, the flame separation structure 130 may further include an opening 133 corresponding to a main body of the battery cell 110. That is, the opening 133 may be positioned in at least a portion of the rest of the flame separation structure 130, except the first extension portion 131 and the second extension portion 132. Accordingly, it is possible to reduce a required amount of the flame separation structure 130 while maintaining the above-described effect of preventing the transmission of the heat and flame between the cells and inducing the movement of the flame by using the flame separation structure 130. Therefore, it is possible to reduce a material cost and an entire weight of the battery module 100.

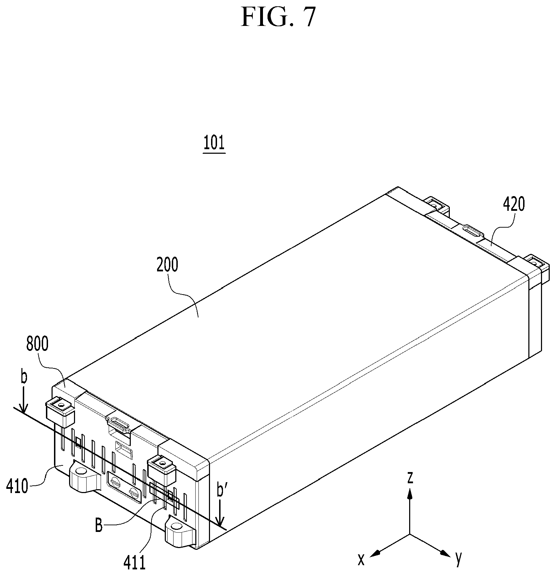

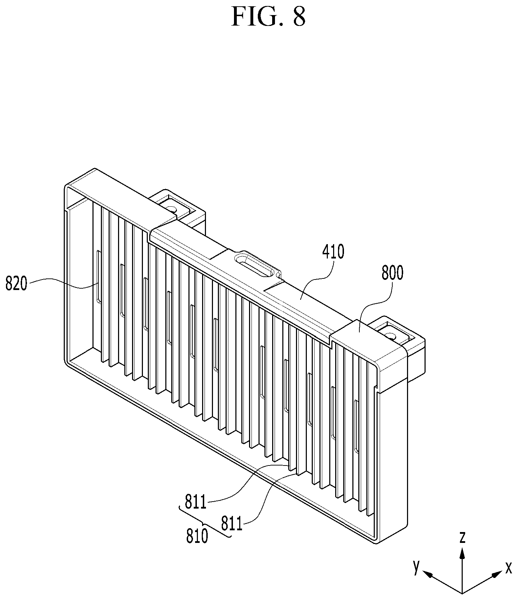

Next, yet another exemplary embodiment of the present invention is described with reference to FIGS. 7 and 8.

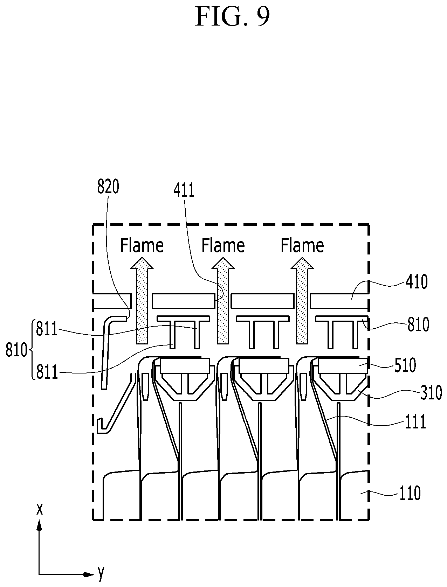

FIG. 7 is a perspective view showing a battery module 101 according to yet another exemplary embodiment of the present invention. FIG. 8 is a perspective view showing the end plate and insulation cover of the battery module of FIG. 7, viewed from the inside thereof. FIG. 9 is a view showing a portion B in a cross section taken along b-b' of FIG. 7.

Referring to FIGS. 7 to 9, according to yet another exemplary embodiment of the present invention, the insulation cover 800 may include a plurality of partition walls 810 positioned on the inside thereof. That is, the plurality of partition walls 810 may be positioned on an inner surface of the insulation cover 800, on which the insulation cover 800 and the battery cell stack 120 face each other. One partition wall 810 of the plurality of partition walls 810 may include a pair of sub partition walls 811, and the sub partition wall 811 may be spaced apart from each other while having the second extension portion 132 of the flame separation structure 130 interposed therebetween. Accordingly, the flame and heat induced between the flame separation structures 130 may still be separated and induced between the partition walls 810.

The insulation cover 800 may include at least one first vent hole 820 positioned in a region between the partition walls 810. That is, the flame induced into a path between the partition walls 810 may be discharged to the outside of the insulation cover 800 through the first vent hole 820.

In addition, the end plate 410 may include a second vent hole 411 positioned in a region corresponding to the first vent hole 820. That is, the flame induced to the path between the partition walls 810 and passed through the first vent hole 820 may be completely discharged to the outside through the second vent hole 411.

It is possible to block the transmission of the flame and gas to another adjacent cell as much as possible based on this structure even when a thermal runaway occurs in some of the battery cells 110 to cause the flame and the gas. In addition, the flame and gas occurring therein may be induced along the movement path formed by the first and second extension portions 131 and 132 of the flame separation structure 130, and discharged to the outside through the first and second vent holes 820 and 411 respectively formed in the insulation cover 800 and the end plate 410. Therefore, it is possible to suppress thermal energy from being accumulated in the battery module 100 by effectively blocking the transmission of the flame and gas occurring in one cell to another cell and rapidly inducing the flame and gas to be discharged to the outside.

Terms indicating directions such as front, back, left, right, up and down are used in this exemplary embodiment, and these terms are used only for convenience of explanation, and may vary depending on a position of a target object or a position of an observer.

One or more battery modules according to this exemplary embodiment described above may be mounted together with various control and protection systems such as a battery management system (BMS), a cooling system and the like to form a battery pack.

The battery module or the battery pack may be applied to various devices. In detail, the battery module or the battery pack may be applied to transportation means such as electric bicycles, electric vehicles, hybrids and the like, is not limited thereto and may be applied to the various devices which may use the secondary batteries.

### <Description of symbols>

100, 101: battery module
120: battery cell stack
200: module frame
410: first end plate
420: second end plate
800: insulation cover
130: flame separation structure
131: first extension portion
132: second extension portion
130a: flame-retardant pad
130b: flame separation sheet
810: partition wall
820: first vent hole
411: second vent hole

## Claims

1. A battery module comprising:
a battery cell stack (120) stacking a plurality of battery cells therein;
a module frame (200) accommodating the battery cell stack (120); and
at least one flame separation structure (130) interposed between the adjacent battery cells among the plurality of battery cells, or between the battery cell stack (120) and the module frame (200),
wherein the flame separation structure (130) includes a first extension portion (131) extended to a space between the battery cell stack (120) and the module frame (200),
the battery module further comprising:
an end plate (410, 420) covering front and rear surfaces of the battery cell stack (120); and
an insulation cover (800) disposed between the battery cell stack (120) and the end plate (410; 420),
wherein a plurality of partition walls (810) protrude to the battery cell stack (120) from an inner surface of the insulation cover (800) facing the battery cell stack (120),
wherein one partition wall (810) of the plurality of partition walls (810) includes a pair of sub partition walls (811) positioned on both sides of the flame separation structure (130),
wherein the insulation cover (800) includes at least one first vent hole (820) positioned between the adjacent partition walls (810) among the plurality of partition walls (810),
wherein the end plate (410) includes at least one second vent hole (411) positioned corresponding to the at least one first vent hole (820).

2. The battery module of claim 1, wherein
at least two flame separation structures (130) are provided, and one or more battery cells are positioned between two adjacent flame separation structures (130) among the flame separation structures (130).

3. The battery module of claim 2, wherein
an isolated space surrounded by the first extension portion (131), the module frame (200) and the battery cell stack (120) is positioned between the two adjacent flame separation structures (130) among the flame separation structures (130).

4. The battery module of claim 1, wherein
each of the plurality of battery cells includes an electrode lead, and
the flame separation structure (130) includes a second extension portion (132) extended corresponding to a region where the electrode lead protrudes.

5. The battery module of claim 4, wherein
the flame separation structure (130) includes an opening (133) positioned in at least a portion of the rest except the first extension portion (131) and the second extension portion (132).

6. The battery module of claim 4, wherein
the flame separation structure (130) includes at least one of a flame-retardant pad (130a) and a flame separation sheet (130b).

7. The battery module of claim 6, wherein
the flame separation structure (130) includes the flame-retardant pad (130a), and the flame separation sheet (130b) positioned on at least a portion of at least one surface of the flame-retardant pad (130a).

8. The battery module of claim 7, wherein
the flame separation sheet (130b) is positioned corresponding to the first extension portion (131).

9. The battery module of claim 7, wherein
the flame separation sheet (130b) is positioned corresponding to the second extension portion (132).

10. The battery module of claim 7, wherein
the flame separation sheet (130b) includes at least one of calcium carbonate (CaCO₃), mica, glass fiber and mineral fiber composite.

11. A battery pack comprising the battery module of claim 1.

## Patentansprüche

1. Batteriemodul, umfassend:
einen Batteriezellenstapel (120), welcher eine Mehrzahl von Batteriezellen darin stapelt;
einen Modulrahmen (200), welcher den Batteriezellenstapel (120) aufnimmt; und
wenigstens eine Flammen-Trennstruktur (130), welche zwischen die benachbarten Batteriezellen aus der Mehrzahl von Batteriezellen oder zwischen den Batteriezellenstapel (120) und den Modulrahmen (200) eingefügt ist,
wobei die Flammen-Trennstruktur (130) einen ersten Erstreckungsabschnitt (131) umfasst, welcher sich in einen Raum zwischen dem Batteriezellenstapel (120) und dem Modulrahmen (200) erstreckt,
wobei das Batteriemodul ferner umfasst:
eine Endplatte (410, 420), welche vordere und hintere Flächen des Batteriezellenstapels (120) abdeckt; und
eine Isolierungsabdeckung (800), welche zwischen den Batteriezellenstapel (120) und die Endplatte (410; 420) eingefügt ist,
wobei eine Mehrzahl von Trennwänden (810) von einer inneren Fläche der Isolierungsabdeckung (800), welche dem Batteriezellenstapel (120) zugewandt ist, zu dem Batteriezellenstapel (120) hervorsteht,
wobei eine Trennwand (810) aus der Mehrzahl von Trennwänden (810) ein Paar von Unter-Trennwänden (811) umfasst, welche an beiden Seiten der Flammen-Trennstruktur (130) positioniert sind,
wobei die Isolierungsabdeckung (800) wenigstens ein erstes Belüftungsloch (820) umfasst, welches zwischen die benachbarten Trennwände (810) aus der Mehrzahl von Trennwänden (810) eingefügt ist,
wobei die Endplatte (410) wenigstens ein zweites Belüftungsloch (411) umfasst, welches entsprechend zu dem wenigstens einen ersten Belüftungsloch (820) positioniert ist.

2. Batteriemodul nach Anspruch 1, wobei
wenigstens zwei Flammen-Trennstrukturen (130) bereitgestellt sind und eine oder mehrere Batteriezellen zwischen zwei benachbarten Flammen-Trennstrukturen (130) aus den Flammen-Trennstrukturen (130) positioniert sind.

3. Batteriemodul nach Anspruch 2, wobei
ein isolierter Raum, welcher durch den ersten Erstreckungsabschnitt (131), dem Modulrahmen (200) und dem Batteriezellenstapel (120) umgeben ist, zwischen den zwei benachbarten Flammen-Trennstrukturen (130) aus den Flammen-Trennstrukturen (130) positioniert ist.

4. Batteriemodul nach Anspruch 1, wobei
jede aus der Mehrzahl von Batteriezellen eine Elektrodenleitung umfasst, und
die Flammen-Trennstruktur (130) einen zweiten Erstreckungsabschnitt (132) umfasst, welcher sich entsprechen zu einem Bereich erstreckt, an welchem die Elektrodenleitung hervorsteht.

5. Batteriemodul nach Anspruch 4, wobei
die Flammen-Trennstruktur (130) eine Öffnung (133) umfasst, welche in wenigstens einem Abschnitt des Rests positioniert ist, mit Ausnahme des ersten Erstreckungsabschnitts (131) und des zweiten Erstreckungsabschnitts (132).

6. Batteriemodul nach Anspruch 4, wobei
die Flammen-Trennstruktur (130) wenigstens eines umfasst aus einer Flammenschutzunterlage (130a) und einer Flammen-Trennbahn (130b).

7. Batteriemodul nach Anspruch 6, wobei
die Flammen-Trennstruktur (130) die Flammenschutzunterlage (130a) und die Flammen-Trennbahn (130b) an wenigstens einem Abschnitt wenigstens einer Fläche der Flammenschutzunterlage (130a) positioniert umfasst.

8. Batteriemodul nach Anspruch 7, wobei
die Flammen-Trennbahn (130b) entsprechend zu dem ersten Erstreckungsabschnitt (131) positioniert ist.

9. Batteriemodul nach Anspruch 7, wobei
die Flammen-Trennbahn (130b) entsprechend zu dem zweiten Erstreckungsabschnitt (132) positioniert ist.

10. Batteriemodul nach Anspruch 7, wobei
die Flammen-Trennbahn (130b) wenigstens eines umfasst aus Calciumcarbonat (CaCO₃), Glimmer, Glasfaser- und Mineralfaser-Verbundstoff.

11. Batteriepack, umfassend das Batteriemodul nach Anspruch 1.

## Revendications

1. Module de batterie comprenant :
un empilement de cellules de batterie (120) dans lequel sont empilées une pluralité de cellules de batterie ;
un cadre de module (200) logeant l'empilement de cellules de batterie (120) ; et
au moins une structure de séparation de flamme (130) interposée entre les cellules de batterie adjacentes parmi la pluralité de cellules de batterie, ou entre l'empilement de cellules de batterie (120) et le cadre de module (200),
dans lequel la structure de séparation de flamme (130) comporte une première partie d'extension (131) s'étendant vers un espace entre l'empilement de cellules de batterie (120) et le cadre de module (200),
le module de batterie comprenant en outre :
une plaque d'extrémité (410, 420) recouvrant des surfaces avant et arrière de l'empilement de cellules de batterie (120) ; et
un couvercle d'isolation (800) disposé entre l'empilement de cellules de batterie (120) et la plaque d'extrémité (410 ; 420),
dans lequel une pluralité de parois de séparation (810) font saillie vers l'empilement de cellules de batterie (120) à partir d'une surface interne du couvercle d'isolation (800) faisant face à l'empilement de cellules de batterie (120),
dans lequel une paroi de séparation (810) de la pluralité de parois de séparation (810) comporte une paire de sous-parois de séparation (811) positionnées des deux côtés de la structure de séparation de flamme (130),
dans lequel le couvercle d'isolation (800) comporte au moins un premier orifice de ventilation (820) positionné entre les parois de séparation adjacentes (810) parmi la pluralité de parois de séparation (810),
dans lequel la plaque d'extrémité (410) comporte au moins un deuxième orifice de ventilation (411) positionné de manière à correspondre à l'au moins un premier orifice de ventilation (820).

2. Module de batterie selon la revendication 1, dans lequel
au moins deux structures de séparation de flamme (130) sont prévues, et une ou plusieurs cellules de batterie sont positionnées entre deux structures de séparation de flamme (130) adjacentes parmi les structures de séparation de flamme (130).

3. Module de batterie selon la revendication 2, dans lequel
un espace isolé entouré par la première partie d'extension (131), le cadre de module (200) et l'empilement de cellules de batterie (120) est positionné entre les deux structures de séparation de flamme (130) adjacentes parmi les structures de séparation de flamme (130).

4. Module de batterie selon la revendication 1, dans lequel
chacune de la pluralité de cellules de batterie comporte un fil d'électrode, et
la structure de séparation de flamme (130) comporte une deuxième partie d'extension (132) s'étendant de manière à correspondre à une région où le fil d'électrode fait saillie.

5. Module de batterie selon la revendication 4, dans lequel
la structure de séparation de flamme (130) comporte une ouverture (133) positionnée dans au moins une partie du reste à l'exception de la première partie d'extension (131) et de la deuxième partie d'extension (132).

6. Module de batterie selon la revendication 4, dans lequel
la structure de séparation de flamme (130) comporte au moins un(e) parmi un tampon ignifuge (130a) et une feuille de séparation de flamme (130b).

7. Module de batterie selon la revendication 6, dans lequel
la structure de séparation de flamme (130) comporte le tampon ignifuge (130a) et la feuille de séparation de flamme (130b) positionnée sur au moins une partie d'au moins une surface du tampon ignifuge (130a).

8. Module de batterie selon la revendication 7, dans lequel
la feuille de séparation de flamme (130b) est positionnée de manière à correspondre à la première partie d'extension (131).

9. Module de batterie selon la revendication 7, dans lequel
la feuille de séparation de flamme (130b) est positionnée de manière à correspondre à la deuxième partie d'extension (132).

10. Module de batterie selon la revendication 7, dans lequel
la feuille de séparation de flamme (130b) comporte au moins un(e) parmi du carbonate de calcium (CaCO₃), du mica, une fibre de verre et un composite de fibres minérales.

11. Bloc-batterie comprenant le module de batterie selon la revendication 1.
